# EUROPEAN PATENT SPECIFICATION

(11) **EP 0 520 789 B1**
(45) Date of publication and mention of the grant of the patent: **23.01.2002**
(21) Application number: 92305851.5
(22) Date of filing: 25.06.1992
(51) Int. Cl.: H04N 7/26, H04N 7/50

(54) **Video coder and coding method**
Videokoder und Kodierungsverfahren
Codeur vidéo et méthode de codage

(30) Priority: 27.06.1991 JP 18291591; 29.05.1992 JP 16364792
(43) Date of publication of application: 30.12.1992
(73) Proprietor: SONY CORPORATION, Tokyo 141 (JP)
(72) Inventor: Fujinami, Yasushi, c/o Patents Div., Shinagawa-ku, Tokyo 141 (JP)
(74) Representative: Cotter, Ivan John

(56) References cited:
- EP-A- 0 399 487
- EP-A- 0 401 854
- EP-A- 0 444 918
- US-A- 4 920 426
- US-A- 4 999 704
- PATENT ABSTRACTS OF JAPAN vol. 13, no. 574 (E-863)19 December 1989 & JP-A-01 241 270 ( HITACHI LTD ) 26 September 1989
- PATENT ABSTRACTS OF JAPAN vol. 15, no. 265 (E-1086)5 July 1991 & JP-A-03 088 489 ( TOSHIBA CORP ) 12 April 1991
- PATENT ABSTRACTS OF JAPAN vol. 13, no. 571 (E-862)18 December 1989 & JP-A-01 238 388 ( MITSUBISHI ELECTRIC CORP. ) 22 September 1989
- PATENT ABSTRACTS OF JAPAN vol. 15, no. 94 (E-1041)6 March 1991 & JP-A-02 305 284 ( MITSUBISHI ELECTRIC CORP. ) 18 December 1990
- SIGNAL PROCESSING IMAGE COMMUNICATION vol. 3, no. 1, 1 February 1991, AMSTERDAM, NL pages 91 - 105 , XP234783 M.E. BLAIN ET AL. 'A Comparison of Vector Quantization Techniques in Transform and Subband Coding of Imagery'
- JP-A-03 085 883 ( HITACHI DENSHI LTD ) 11.April 1991 & PATENT ABSTRACTS OF JAPAN vol. 15, no. 261 (E-1085)3 July 1991
- PATENT ABSTRACTS OF JAPAN vol. 015, no. 261 (E-1085) 03 July 1991 & JP 03 085 883 A (HITACHI DENSHI LTD) 11 April 1991

## Description

This invention relates to video coders and coding methods.

The amount of video data required to define a moving image is very large compared with that required to define audio information. This makes compression of video data prior to recording on a record medium a desirable step.

However, previously proposed video coders are generally designed to code video data in real time, and in most cases, only one path is formed, which results in the following problems:
1. Encoding does not start until a substantial amount of data has been input;
2. Encoding cannot be restarted;
3. Fine control such as improving the quality of a particular portion of the image is impossible; and
4. A substantial amount of hardware is required, because the processing must be done at the frame rate.

Patent Abstracts of Japan, Vol. 15, No 265 (E-1086) and JP-A-3 088 489 disclose a system in which the required variation of the quantization step width for one block is determined and then fed back to control the coding of a subsequent block.

European Published Patent Application EP-A-0,444,918 (published 04.09.91, and thus after the earliest priority date of the present application and so relevant for novelty only under EPC Article 54(3) and not Article 56) discloses a method of compressing image data in which original image data is quantised with an initial first quantisation step, a new quantisation step is then calculated from the calculated image data and the original image data are again quantised with this new quantisation step.

According to the present invention there is provided a video coder for compressing the data amount of input video data and encoding said input video data, the video coder comprising:
encoder means (3) for encoding (S24) said input video data in accordance with a coding parameter to provide first coded video data;
control means (14) for varying in response to said first coded video data said coding parameter which is necessary for the processing by said encoder means (3) to form a varied coding parameter; and
memory means (5) for storing said varied coding parameter;
characterised by:
means for storing (11) said input video data; and characterised in that
said encoder means encodes again (S29, S24) at least a portion of said input video data stored in said means for storing and identical to that encoded to produce said first coded video data in accordance with said varied coding parameter to provide second coded video data; and
wherein said coding parameter includes frame structure information which specifies one of an intraframe coding system and a predictive coding system for every frame of said input video data.

According to the present invention there is also provided a video coding method for compressing the amount of input video data and recording said input video data, the method comprising the steps of:
setting a coding parameter;
storing said coding parameter in memory means (5);
coding (S24) said input video data in accordance with said coding parameter to provide first coded video data; and
varying in response to said first coded video data said coded parameter stored in said memory means (5) to form a varied coding parameter; characterised by:
   storing said input video data; and
   encoding again at least a portion of said input video data identical to that encoded to produce said first coded video data in accordance with said varied coding parameter to provide second coded video data; and wherein said coding parameter includes frame structure information which specifies one of an intraframe coding system and a predictive coding system for every frame of said input video data.

The invention will now be described by way of example with reference to the accompanying drawings, throughout which like parts are referred to by like references, and in which:
Figure 1 is a block diagram of an embodiment of video coder according to the present invention;
Figure 2 is a flowchart for explaining operation in detecting a scene change in the embodiment of Figure 1;
Figure 3 is a diagram used to explain a frame structure;
Figure 4 is a table used to explain the relation between frame structures and predictive modes; and
Figures 5 and 6 are further flowcharts.

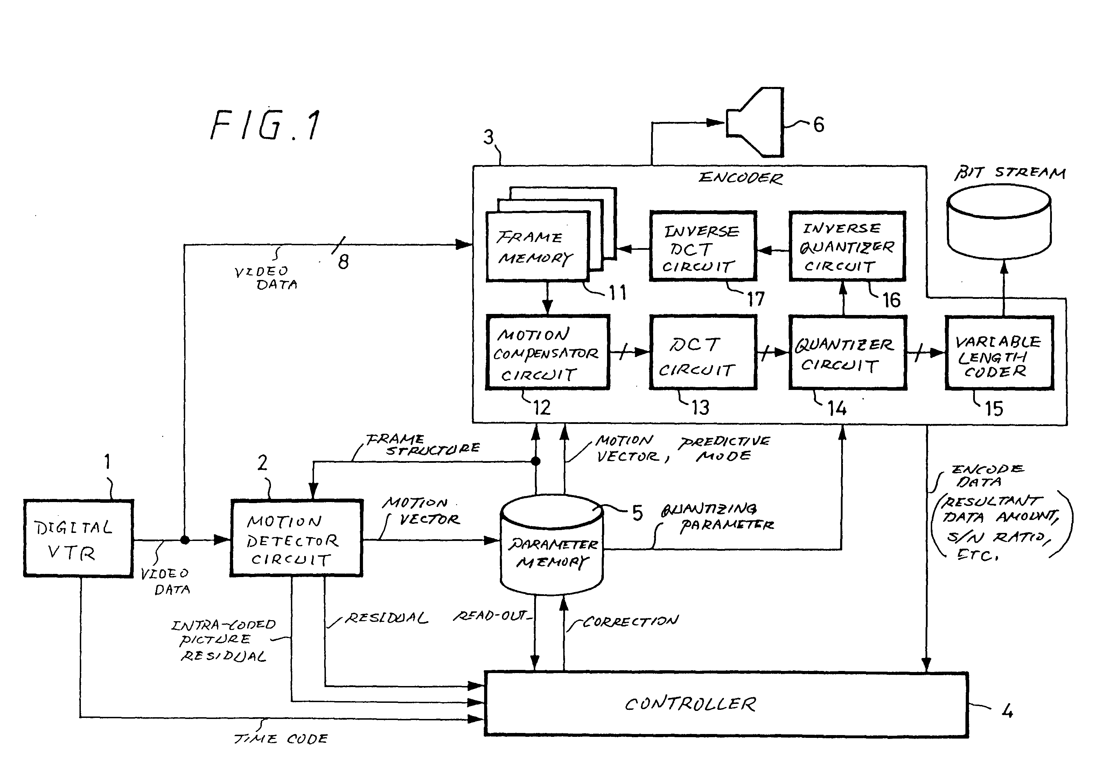

Referring to Figure 1, a digital video tape recorder (DVTR) 1 reproduces video data and supplies the video data thus played back to a motion detector circuit 2 and an encoder 3. Also, the DVTR 1 supplies a time code corresponding to the reproduced data to a controller 4. The motion detector circuit 2 operates to detect the motion of a corresponding moving image from the video data input thereto and supplies a signal corresponding to a detected result thereof to the controller 4 and a parameter memory 5. The controller 4 calculates parameters, and supplies the parameters thus calculated to the parameter memory 5, in which they are stored. Various parameters stored in the parameter memory 5 are supplied to the encoder 3 and the motion detector circuit 2. Video data processed by the encoder 3 are supplied to apparatus, not shown, as a bit stream, and are also supplied to a video monitor 6, and are thereby displayed on a picture screen of the video monitor 6.

As shown in Figure 1, the encoder 3 comprises a frame memory 11 which stores video data, a motion compensator circuit 12 which calculates a difference by using a motion vector, which is known as 'motion compensation', a discrete cosine transform (DCT) circuit 13 for processing data in a DCT fashion, a quantizer circuit 14 for quantizing data output from the DCT circuit 13, a variable length coder circuit 15 which converts the data quantized by the quantizer circuit 14 into a variable length code, an inverse quantizer circuit 16 for inverse-quantizing the data quantized by the quantizer circuit 14 and an inverse DCT circuit 17 for processing the data thus inverse-quantized by the inverse quantizer 16 in an inverse quantizing fashion.

Operation of this video coder will now be described.

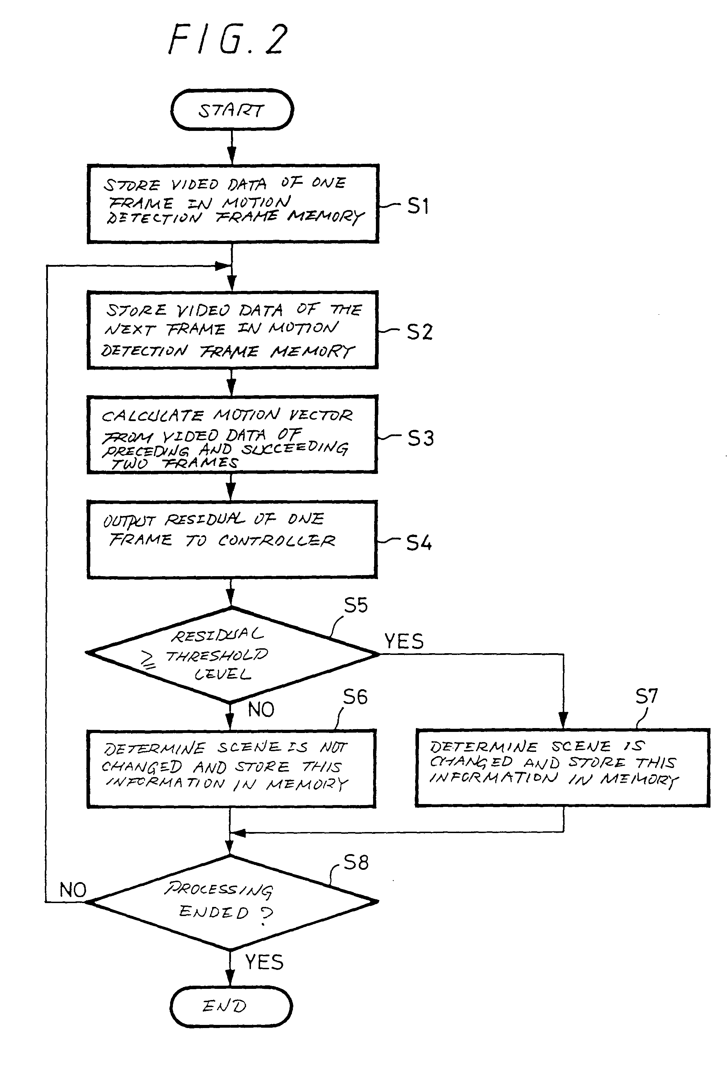

The DVTR 1 plays back video data from a video tape (not shown) and supplies the reproduced video data to the motion detector circuit 2. The motion detector circuit 2 operates to detect the change of scenes in accordance with the flowchart of Figure 2.

Referring to Figure 2, following the start of operation, the motion detector circuit 2 stores data of one frame input thereto from the DVTR 1 in a motion detecting frame memory housed therein in step S1. In the next step S2, the image of the next frame is similarly stored in a motion detecting frame memory housed in the motion detector circuit 2. In the next step S3, a motion vector is calculated from video data of two succeeding frames. Image data are divided into blocks of a predetermined size (for example, 8x8 pixels) and the motion vector is detected at every block. The motion vector thus obtained is supplied to and stored in the parameter memory 5.

The motion detector circuit 2 calculates one frame of a residual information (absolute difference sum or square sum of data predicted by the resultant motion vector and present data) and outputs a calculated result to the controller 4 in step S4. In the next decision step S5, the controller 4 compares the residual information input from the motion detector circuit 2 with a predetermined threshold level previously set. If the residual information is smaller than or equal to the threshold level as represented by a NO at decision step S5, then the processing proceeds to step S6, whereat it is determined that the scene is not changed and this information is stored in the motion detection frame memory (not shown). If on the other hand the residual is larger than the threshold level as represented by a YES in decision step S5, then the processing proceeds to step S7, whereat it is determined that the scene has changed. The controller 4 stores the information concerning the change of scene in the memory housed therein. Similar processing is repeated until video data are thoroughly processed (in decision step S8). In this way, the controller 4 judges the frame structure of the input video data, and transfers and stores the frame structure thus determined in the parameter memory 5.

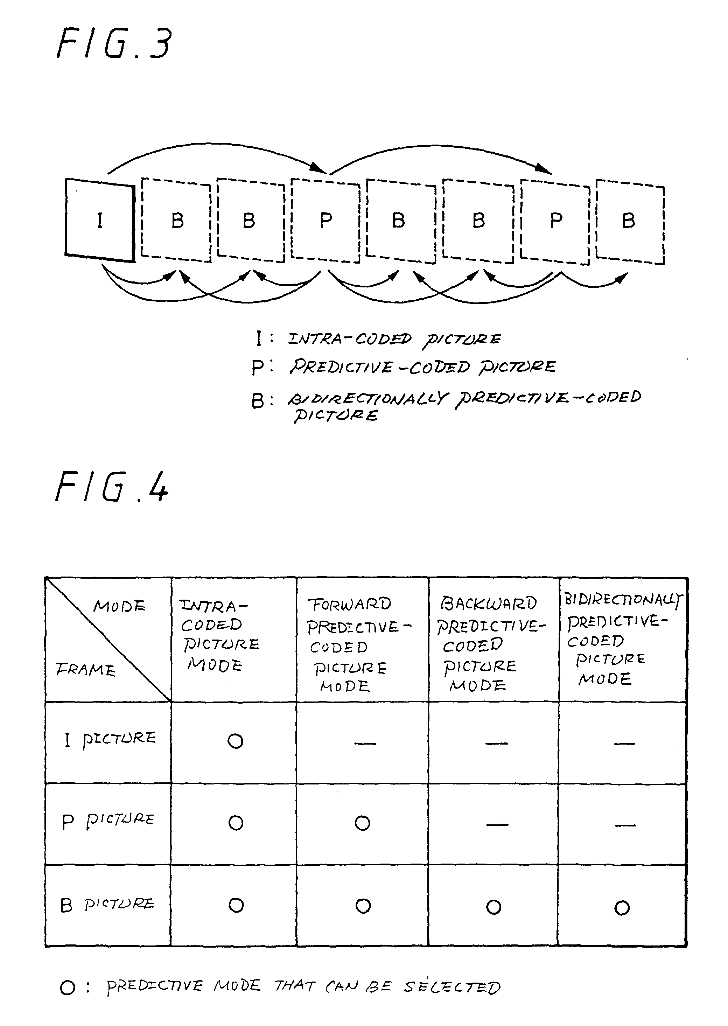

The frame structure will be described with reference to Figure 3.

As shown in Figure 3, it is frequently observed that video data of successive frames from a time standpoint are associated with one another. Accordingly, the difference between video data of successive frames from a time standpoint is calculated and the difference therebetween is transmitted, thereby compressing the amount of video data. Images or pictures transmitted on the basis of this principle are classified into three images, that is, I picture (intra-coded picture), P picture (predictive-coded picture) and B picture (bidirectionally predictive-coded picture).

The I picture uses only a closed information within one picture thereof when encoded and is needed to effect random access and high speed playback. The P picture (forward predictive-coded picture) uses the preceding I picture or P picture, which is already decoded, as a reference picture to calculate a difference. In actual practice, the more efficient one of the coding process for coding a difference between a picture and a predictive picture whose motion is compensated (inter-coding process) and coding process for coding a picture without calculating a difference (intra-coded process) is selected at the units of macro-block (for example, 16 x 16 pixels) as the predictive mode. The B picture uses as a predictive picture three kinds of the preceding and already-decoded I picture or P picture, the succeeding and already-decoded I picture or P picture or the interpolated picture formed by the former two kinds of pictures. Thus, an amount of data concerning an afterimage of a moving object, for example, can be compressed. In practice, the most efficient one of the inter-coded and intra-coded processes is selected at the units of the macro block as the predictive mode.

Figure 4 shows a table of predictive modes that can be selected at the units of macro-block relative to respective frame structures.

The frame structure indicates the kinds of frames composed of the I picture, the P picture and B picture. The sequential order of the frame structure is generally determined in such a pre-determined sequence as to dispose, for example, one P picture between two I pictures and to dispose two B pictures between an I picture and a P picture or the like. When the change of scene occurs, the above-mentioned sequence is not always kept and some suitable processing such as to select the frame structure of the picture as the I picture is necessary.

This frame structure is read out from the parameter memory 5 and supplied to the motion detector circuit 2 and is thereby used to calculate a motion vector. Further, this frame structure is also supplied to the motion compensator circuit 12 in the encoder 3 and used to calculate a motion compensation amount, as will be described later.

The motion detector circuit 2 calculates a mean value of pixels and an absolute residual (absolute value difference or square sum) of respective pixels in respective macro-blocks and outputs the same to the controller 4 as an intra-coded picture residual. The controller 4 operates to determine the predictive mode of each macro-block on the basis of the already-determined frame structure, the residual and the intra-coded picture residual calculated by the motion detector circuit 2 when the change of scene is detected. The predictive mode is used to set a reference picture that is used by the motion compensator circuit 12 in the encoder 3 to calculate the difference. One of four modes, that is, intra-coded picture mode, forward predictive-coded picture mode, backward predictive-coded picture mode and bidirectionally predictive-coded picture mode is selected as the predictive mode.

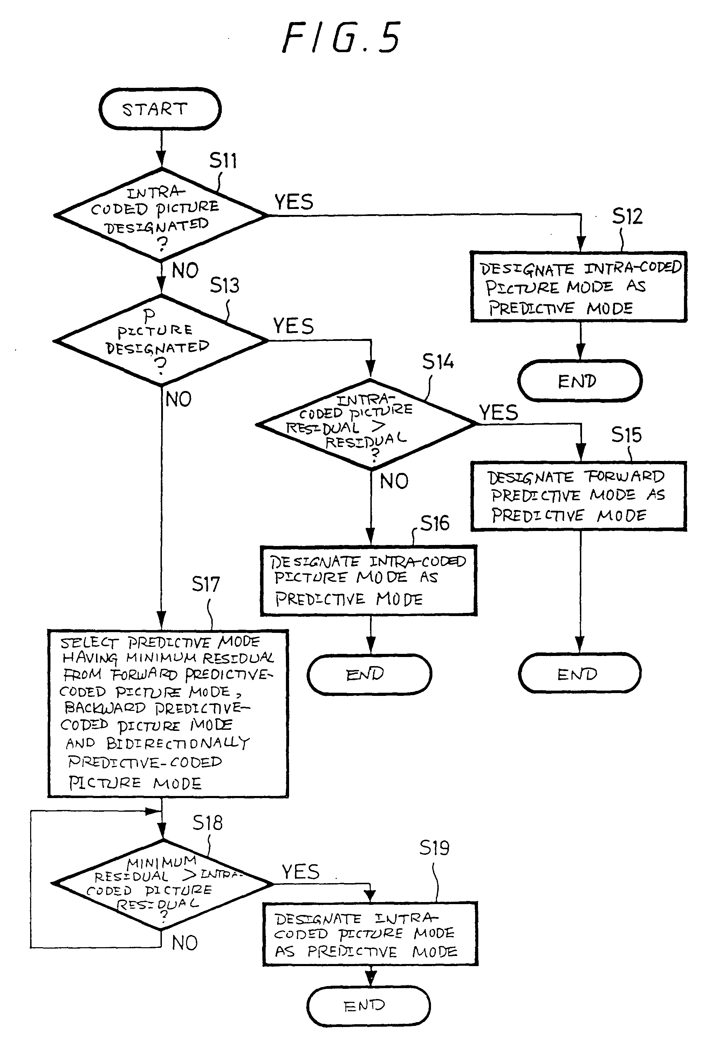

The predictive mode is determined is accordance with a flowchart forming Figure 5, for example.

Referring to Figure 5, following the Start of operation, it is determined in decision step S11 by the controller 4 whether or not the frame structure is designated as the I picture. If the frame structure is designated as the I picture as represented by a YES at decision step S11, then the processing proceeds to step S12, whereat the intra-coded picture mode is designated as the predictive mode. If the frame structure is not designated as the I picture as represented by a NO at decision step S11. then the processing proceeds to the next decision step S13. In decision step S13, it is determined whether or not the P picture is designated as the frame structure. If the P picture is designated as the frame structure as represented by a YES at decision step S13, then the processing proceeds to the next decision step S14, whereat the residual calculated by the motion detector circuit 2 and the intra-coded picture residual are compared with each other. If the intra-coded picture residual is larger than the residual as represented by a YES at decision step S14, then the processing proceeds to step S15. In step S15, the forward predictive mode is designated as the predictive mode because it is considered that the encoding efficiency can be improved more if the difference is coded by using the predictive mode. If the intra-coded picture residual is smaller than the residual as represented by a NO at decision step S14, then the processing proceeds to step S16, whereat the intra-coded picture mode is designated as the predictive mode because it is considered that the encoding efficiency can be improved by using the intra-frame coding. Further, if the frame structure is not the P picture as represented by a NO at decision step S13, then it is considered that the B picture is designated as the frame structure and thus the processing proceeds to step S17. In step S17, one of three modes of forward predictive-coded picture mode, backward predictive-coded picture mode and bidirectionally predictive-coded picture mode and whose residual becomes minimum is assumed to be a predictive mode. In the next decision step S18, it is determined whether or not the minimum residual is larger than the intra-coded picture residual. If the minimum residual is larger than the intra-coded picture residual as represented by a YES at decision step S18, then the processing proceeds to step S19, whereat the predictive mode is designated as the intra-coded picture mode because the intra-frame coding can improve the coding efficiency more. If the minimum residual is smaller than the residual within the picture as represented by a NO at decision step S18, then the processing returns to step S17.

Having determined the predictive mode, the controller 4 supplies the predictive mode parameter thus determined to the parameter memory 5, in which it is stored. This predictive mode parameter is supplied to the motion compensator circuit 12 to be used.

When the intra-coded picture mode is designated as the frame structure, the motion compensator circuit 12 outputs the input image data as it is. At that time, the motion vector is not supplied to the motion compensator circuit 12 or it can be neglected.

When the forward predictive-coded picture mode is designated as the predictive mode, the motion compensator circuit 12 extracts a predictive picture from the forward predictive frame stored in the frame memory 11 by utilizing the motion vector supplied thereto and calculates and outputs a difference between the predictive picture and input picture data.

When the backward predictive mode is designated, then the motion compensator circuit 12 extracts a predictive image from the backward predictive frame stored in the frame memory 11 by utilizing the motion vector supplied thereto.

When the bidirectionally predictive-coded picture mode is designated as the predictive mode, the motion compensator circuit 12 extracts the forward predictive picture from the forward predictive frame stored in the frame memory 11 by utilizing two motion vectors of the forward and rearward predictive pictures. Further, the motion compensator 12 extracts the predictive picture from the rearward predictive frame and averages the thus extracted forward and rearward predictive pictures to provide a predictive picture and calculates and outputs a difference between the predictive picture and the input picture data.

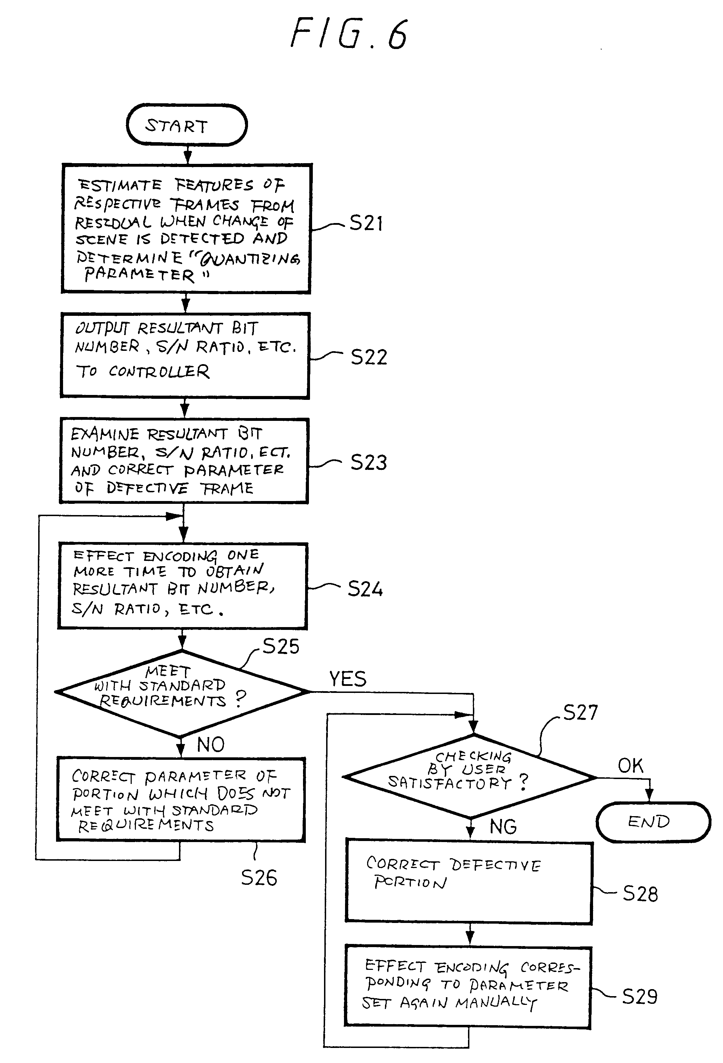

When the motion vector and the frame structure are determined as described above, the processing shown in the flowchart forming Figure 6 is executed.

Referring to Figure 6, following the Start of operation, in step S21, the controller 4 estimates the features of respective frames from the residual calculated by the motion detector circuit 2 when the change of scene is detected, thereby determining the quantizing parameter. The quantizing parameter is used to set a quantization step size of the quantizer circuit 14 in the encoder 3. To be more specific, this quantizing parameter is used as a divisor when data output from the DCT circuit 13, for example, are divided by a predetermined value.

Having determined the quantizing parameter, the controller 4 supplies the quantizing parameter thus determined to the parameter memory 5, in which it is stored. This quantizing parameter is supplied from the parameter memory 5 to the quantizer circuit 14 and determines the quantization step size of the quantizer circuit 14.

The encoder 3 operates to encode the video data supplied thereto from the DVTR 1 in response to the motion vector, the frame structure, the predictive mode and the quantizing parameter supplied thereto from the parameter memory 5. Then, the encoder 3 outputs resultant encode data (bit rate and S/N ratio) to the controller 4 in step S22. The controller 4 examines the resultant bit number, the S/N ratio or the like supplied thereto from the encoder 3 and sets a parameter of a defective frame one more time in step S23. That is, if the resultant bit number cannot be reduced sufficiently (that is, the amount of data cannot be compressed sufficiently) or a satisfactory S/N ratio cannot be obtained, then the parameter thus set is regarded as an invalid one and a parameter is set one more time.

In the next step S24, the encoder 3 encodes again the video data in accordance with the parameter thus set again. The resultant bit number and S/N ratio from the encoder 3 are supplied to the controller 4 similarly as described above. In the next decision step S25, it is determined by the controller 4 whether or not the resultant bit number and S/N ratio meet with standard requirements. If they do not meet with standard requirements as represented by a NO at decision step S25, then the processing proceeds to the next step S26, whereat the parameter of the portion which does not meet with standard requirements is corrected. Then, the processing returns to step S24, wherein the encoder 3 encodes the video data one more time.

If the resultant bit number and S/N ratio, which meet with standard requirements, are obtained as represented by a YES at decision step S25, then the processing proceeds to the next step S27, whereat the checking by the user is carried out. That is, the picture processed by the encoder 3 is output and displayed on the video monitor 6. In the next step S28, the user corrects a defective portion, if any, while watching the picture displayed on the video monitor 6. In other words, the predictive mode and the quantizing parameter are set one more time via the controller 4 in a manual fashion, and the encoder 3 encodes again the video data in accordance with the corrected parameter in step S29. This processing from steps S27 to S29 is repeated until it is determined visually that the picture has no problem.

If a satisfactory picture is thus obtained, then the bit stream output from the encoder 3 is supplied to an apparatus (not shown), thereby being recorded, for example, on a record medium such as a disc or the like. The parameter memory 5 stores all parameters that are adjusted and set as described above. If the parameter is set as described above, then the video data output from the DVTR 1 can be correctly compressed in data amount into image data set and adjusted as described above and then output.

Processing by the encoder 3 will be described next.

Referring back to Figure 1, the video data input to the encoder 3 from the DVTR 1 are stored in the frame memory 11 thereof. The motion compensator circuit 12 compensates for the video data stored in the frame memory 11 by using the predictive mode and the motion vector input thereto from the parameter memory 5 thereto to generate a predictive picture. Data of the predictive picture whose motion are compensated for is supplied to the DCT circuit 13, in which they are processed in a DCT fashion. The DCT processing expresses a picture not by the pixel level but by the amount of frequency component of a cosine function contained therein. For example, a two-dimensional DCT converts a pixel block of 8 x 8 pixels into a coefficient block of 8 x 8 cosine function components. Accordingly, in a natural picture picked up by a television camera, for example, it is frequently observed that the above coefficient block is presented as a smooth signal. In this case, if the video data are processed in a DCT fashion, the amount of data can be reduced efficiently.

When the quantizer circuit 14 quantizes the output of the DCT circuit 13 by a predetermined step size in response to the quantizing parameter supplied thereto from the parameter memory 5, then most of the data thus processed in a DCT fashion become zero and a small amount of large coefficient remains. Then, the output of the quantizer circuit 14 is supplied to the variable length coder circuit 15, in which it is scanned in a zigzag fashion to provide a Huffman code (variable length code) having a set of non-zero coefficient and zero-run indicating the number of zeroes continuously provided in front of the non-zero coefficient. A data amount of Huffman code is considerably compressed as compared with the original video data output from the DVTR 1.

When the P picture or B picture is processed as set forth above, data of the preceding frame are needed from a time standpoint. To prepare such data, the output of the quantizer circuit 14 is inverse-quantized by the inverse-quantizer circuit 16. Then, the inverse-quantized data are processed by the inverse DCT circuit 17 in an inverse-DCT fashion and then stored in the frame memory 11. That is. the same data as that quantized by the quantizer circuit 14 and which is output from the variable length coder circuit 15 are stored in the frame memory 11. The motion compensator circuit 12 processes the data in a predetermined manner with reference to the data of the preceding frame stored in the frame memory 11, if necessary.

The data thus encoded are read out from the frame memory 11 and supplied to the video monitor 6, thereby making it possible visually to confirm the resultant picture thus processed.

With this video coder, since the parameters necessary for the encoding processing are stored, the data are coded via a multipath, which can reduce a restriction from a time standpoint and also reduces the amount of hardware needed for encoding.

Moreover, since the video coder has encoded parameters prepared therein, only a necessary portion need be repeatedly modified, thereby making it possible to effect finer control.

## Claims

1. A video coder for compressing the data amount of input video data and encoding said input video data, the video coder comprising:
encoder means (3) for encoding (S24) said input video data in accordance with a coding parameter to provide first coded video data;
control means (14) for varying in response to said first coded video data said coding parameter which is necessary for the processing by said encoder means (3) to form a varied coding parameter; and
memory means (5) for storing said varied coding parameter;
**characterised by**:
means for storing (11) said input video data; and **characterised in that** said encoder means encodes again (S29, S24) at least a portion of said input video data stored in said means for storing and identical to that encoded to produce said first coded video data in accordance with said varied coding parameter to provide second coded video data; and wherein said coding parameter includes frame structure information which specifies one of an intraframe coding system and a predictive coding system for every frame of said input video data.

2. A coder according to claim 1 wherein said encoder means (3) includes quantizing means (14) for quantizing said video data, and said coding parameter includes a quantizing parameter for controlling a quantizing characteristic of said quantizing means (14).

3. A coder according to claim 1 or claim 2 wherein said coding parameter includes predictive mode information which selects a reference picture for calculating a difference of every predetermined block of a frame according to one of forward predictive coding, backward predictive coding and bidirectional predictive coding.

4. A coder according to claim 2 further comprising motion detecting means (2) for detecting motion of said video data and in which said encoder means (3) includes inverse quantizing means (16) for inverse-quantizing said quantized data and motion compensating means (12) for compensating a motion of said inverse-quantized data by using the motion victor detected by said motion detecting means (2) and said coding parameter includes said motion vector.

5. A coder according to claim 4 wherein said encoder means (3) includes means (13) provided preceding said quantizing means (14) for processing said video data in a discrete cosine transform (DCT) fashion, and means (17) succeeding said inverse-quantizing means (16) for processing said video data in an inverse-DCT fashion.

6. A video coding method for compressing the amount of input video data and recording said input video data, the method comprising the steps of:
setting a coding parameter;
storing said coding parameter in memory means (5);
coding (S24) said input video data in accordance with said coding parameter to provide first coded video data; and
varying in response to said first coded video data said coded parameter stored in said memory means (5) to form a varied coding parameter;
**characterised by**:
storing said input video data; and
encoding again at least a portion of said input video data identical to that encoded to produce said first coded video data in accordance with said varied coding parameter to provide second coded video data; and
wherein said coding parameter includes frame structure information which specifies one of an intraframe coding system and a predictive coding system for every frame of said input video data.

7. A method according to claim 6 wherein said coding parameter includes a quantizing parameter which is used to control a quantizing characteristic.

8. A method according to claim 6 wherein said coding parameter includes predictive mode information which selects a reference picture for calculating a difference of every predetermined block of a frame according to one of forward predictive coding, backward predictive coding and bidirectional predictive coding.

9. A method according to claim 6 wherein said coding parameter includes a motion vector for motion compensation.

## Patentansprüche

1. Videocodierer zum Komprimieren der Datenmenge von Eingangsvideodaten und zum Codieren der Eingangsvideodaten, wobei der Videocodierer umfaßt:
eine Codiereinrichtung (3) zum Codieren (S24) der Eingangsvideodaten gemäß einem Codierparameter, um erste codierte Videodaten bereitzustellen; eine Steuereinrichtung (14) zum Variieren als Antwort auf die ersten codierten Videodaten des Codierparameters, der zur Verarbeitung durch die Codiereinrichtung (3) notwendig ist, um einen variierten Codierparameter zu bilden; und eine Speichereinrichtung (5) zum Speichern des variierten Codierparameters;
**gekennzeichnet durch**
eine Einrichtung zum Speichern (11) der Eingangsvideodaten; und **dadurch gekennzeichnet, daß** die Codiereinrichtung zumindest einen Teil der Eingangsvideodaten, die in der Speichereinrichtung gespeichert sind und identisch zu den codierten sind, nochmals codiert (S29, S24), um die ersten codierten Videodaten gemäß dem variierten Codierparameter zu erzeugen, um zweite codierte Videodaten bereitzustellen; und wobei der Codierparameter eine Vollbildstrukturinformation umfaßt, die ein Intrarahmen-Codiersystem oder ein Vorhersage-Codiersystem für jedes Vollbild der Eingangsvideodaten angibt.

2. Codierer nach Anspruch 1, wobei die Codiereinrichtung (3) eine Quantisierungseinrichtung (14) umfaßt, um die Videodaten zu quantisieren, und der Codierparameter einen Quantisierungsparameter umfaßt, um eine Quantisierungscharakteristik der Quantisierungseinrichtung (14) zu steuern.

3. Codierer nach Anspruch 1 oder 2, wobei der Codierparameter eine Vorhersagemodusinformation umfaßt, die ein Referenzbild auswählt, um eine Differenz von jedem vorher-festgelegten Block eines Vollbilds gemäß einer Vorwärtsvorhersagecodierung, Rückwärtsvorhersagecodierung oder Bidirektional-Vorhersagecodierung zu berechnen.

4. Codierer nach Anspruch 2, der außerdem eine Bewegungsermittlungseinrichtung (2) umfaßt, um die Bewegung der Videodaten zu ermitteln und bei der die Codiereinrichtung (3) eine Invers-Quantisierungseinrichtung (16), um die Quantisierungsdaten invers-zu-quantisieren, und eine Bewegungskompensationseinrichtung (12) umfaßt, um eine Bewegung der invers-quantisierten Daten zu kompensieren, wobei der Bewegungsvektor verwendet wird, der durch die Bewegungsermittlungseinrichtung (2) ermittelt wird, und der Codierparameter den Bewegungsvektor umfaßt.

5. Codierer nach Anspruch 4, wobei die Codiereinrichtung (3) eine Einrichtung (13) umfaßt, die der Quantisierungseinrichtung (14) vorhergehend bereitgestellt ist, um die Videodaten in einer diskreten Kosinustransformationsart (DCT) zu verarbeiten, und eine Einrichtung (17), die der Invers-Quantisierungseinrichtung (16) folgt, um die Videodaten in einer inversen DCT-Art zu verarbeiten.

6. Videocodierverfahren zum Komprimieren der Menge von Eingangsvideodaten und zum Aufzeichnen der Eingangsvideodaten, wobei das Verfahren folgende Schritte umfaßt:
Wählen eines Codierparameters;
Speichern des Codierparameters in einer Speichereinrichtung (5);
Codieren (S24) der Eingangsvideodaten gemäß den Codierparameter, um erste codierte Videodaten bereitzustellen; und
Variieren als Antwort auf die ersten codierten Videodaten des Codierparameters, der in der Speichereinrichtung (5) gespeichert ist, um einen variierten Codierparameter zu bilden;
**gekennzeichnet durch**:
Speichern der Eingangsvideodaten; und
nochmaliges Codieren zumindest eines Teils der Eingangsvideodaten, die identisch mit den codierten sind, um die ersten codierten Videodaten gemäß dem variierten Codierparameter zu erzeugen, um zweite codierte Videodaten zu liefern; und wobei der Codierparameter eine Vollbildstrukturinformation umfaßt, welche ein Intravollbild-Codiersystem oder Vorhersage-Codiersystem für jedes Vollbild der Eingangsvideodaten angibt.

7. Verfahren nach Anspruch 6, wobei der Codierparameter einen Quantisierungsparameter umfaßt, der dazu verwendet wird, eine Quantisierungscharakteristik zu steuern.

8. Verfahren nach Anspruch 6, wobei der Codierparameter eine Vorhersagemodusinformation umfaßt, die ein Referenzbild auswählt, um eine Differenz eines jeden vorher-festgelegten Blocks eines Vollbilds gemäß dem Vorwärtsvorhersagecodieren, dem Rückwärtsvorhersagecodieren oder dem bidirektionalen Vorhersagecodieren zu berechnen.

9. Verfahren nach Anspruch 6, wobei der Codierparameter einen Bewegungsvektor zur Bewegungskompensation umfaßt.

## Revendications

1. Codeur vidéo pour compresser la quantité de données vidéo d'entrée et coder lesdites données vidéo d'entrée, le codeur vidéo comprenant :
un moyen de codeur (3) pour coder (S24) lesdites données vidéo d'entrée selon un paramètre de codage pour fournir des premières données vidéo codées ; un moyen de commande (14) pour faire varier en réponse auxdites premières données vidéo codées ledit paramètre de codage qui est nécessaire pour le traitement par ledit moyen de codeur (3) pour former un paramètre de codage varié ; et
un moyen de mémoire (5) pour stocker lesdits paramètres de codage variés ;
**caractérisé par** :
un moyen pour stocker (11) lesdites données vidéo d'entrée, et **caractérisé en ce que** ledit moyen de codeur code de nouveau (S29, S24) au moins une partie desdites données vidéo d'entrée stockées dans ledit moyen pour le stockage et identiques à celles codées pour produire lesdites premières données vidéo codées selon ledit paramètre de codage varié pour fournir des secondes données vidéo codées ; et dans lequel ledit paramètre de codage comprend des informations de structure d'image qui spécifient un d'un système de codage intra-trame et d'un système de codage prédictif pour chaque image desdites données vidéo d'entrée.

2. Codeur selon la revendication 1 dans lequel ledit moyen codeur (3) comprend un moyen de quantification (14) pour quantifier lesdites données vidéo, et ledit paramètre de codage comprend un paramètre de quantification pour commander une caractéristique de quantification dudit moyen de quantification (14).

3. Codeur selon la revendication 1 ou 2 dans lequel ledit paramètre de codage comprend des informations de mode prédictif qui sélectionnent une image de référence pour calculer une différence de chaque bloc prédéterminé d'une image selon un du codage prédictif pro-actif, du codage prédictif rétro-actif et du codage prédictif bidirectionnel.

4. Codeur selon la revendication 2 comprenant en outre un moyen de détection de mouvement (2) pour détecter un mouvement desdites données vidéo et dans lequel ledit moyen codeur (3) comprend un moyen de quantification inverse (16) pour quantifier en inverse lesdites données quantifiées et un moyen de compensation de mouvement (12) pour compenser un mouvement desdites données quantifiées en inverse en utilisant le vecteur de mouvement détecté par ledit moyen de détection de mouvement (2) et ledit paramètre de codage comprend ledit vecteur de mouvement.

5. Codeur selon la revendication 4 dans lequel ledit moyen codeur (3) comprend un moyen (13) fourni avant ledit moyen de quantification (14) pour traiter lesdites données vidéo par une transformée discrète de cosinus (DCT), et un moyen (17) après ledit moyen de quantification inverse (16) pour traiter lesdites données vidéo par une transformation DCT inverse.

6. Procédé de codage vidéo pour compresser la quantité de données vidéo d'entrée et enregistrer lesdites données vidéo d'entrée, le procédé comprenant les étapes de :
réglage d'un paramètre de codage ;
stockage dudit paramètre de codage dans un moyen de mémoire (5) ;
codage (S24) desdites données vidéo d'entrée selon ledit paramètre de codage pour fournir des premières données vidéo codées ; et
changement en réponse auxdites premières données vidéo codées dudit paramètre codé stocké dans ledit moyen de mémoire (5) pour former un paramètre de codage varié ; **caractérisé par** :
le stockage desdites données vidéo d'entrée ; et
le codage de nouveau au moins d'une partie desdites données vidéo d'entrée identiques à celles codées pour produire lesdites premières données vidéo codées selon ledit paramètre de codage varié pour fournir des secondes données vidéo codées, et dans lequel ledit paramètre de codage comprend des informations de structure d'image qui spécifient un d'un système de codage intra-trame et d'un système de codage prédictif pour chaque trame desdites données vidéo d'entrée.

7. Procédé selon la revendication 6, dans lequel ledit paramètre de codage comprend un paramètre de quantification qui est utilisé pour commander une caractéristique de quantification.

8. Procédé selon la revendication 6 dans lequel ledit paramètre de codage comprend des informations de mode prédictif qui sélectionnent une image de référence pour calculer une différence de chaque bloc prédéterminé d'une image selon un du codage prédictif pro-actif, du codage prédictif rétro-actif et du codage prédictif bidirectionnel.

9. Procédé selon la revendication 6 dans lequel ledit paramètre de codage comprend un vecteur de mouvement pour une compensation de mouvement.
